(19) Europäisches Patentamt / European Patent Office / Office européen des brevets

(11) **EP 3 016 283 B1**

(12) **EUROPEAN PATENT SPECIFICATION**

(45) Date of publication and mention
of the grant of the patent:
**13.09.2017 Bulletin 2017/37**

(51) Int Cl.:
*G09C 1/00* *(2006.01)*     *H04L 9/32* *(2006.01)*

(21) Application number: **14190728.7**

(22) Date of filing: **28.10.2014**

(54) **Apparatus and method for observing a ring of interconnected inverting circuit elements**

Vorrichtung und Verfahren zum Beobachten eines Rings von verbundenen Inverterschaltelementen

Appareil et procédé pour observer un anneau d'éléments de circuits inverseurs interconnectés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.05.2016 Bulletin 2016/18**

(73) Proprietor: **Fraunhofer-Gesellschaft zur
Förderung der
angewandten Forschung
80686 München (DE)**

(72) Inventor: **Hesselbarth, Robert
82194 Gröbenzell (DE)**

(74) Representative: **2SPL Patentanwälte PartG mbB
Postfach 15 17 23
80050 München (DE)**

(56) References cited:
**US-B1- 8 848 905**

• QINGQING CHEN ET AL: "The Bistable Ring PUF:
A new architecture for strong Physical
Unclonable Functions", HARDWARE-ORIENTED
SECURITY AND TRUST (HOST), 2011 IEEE
INTERNATIONAL SYMPOSIUM ON, IEEE, 5 June
2011 (2011-06-05), pages 134-141, XP031894838,
DOI: 10.1109/HST.2011.5955011 ISBN:
978-1-4577-1059-9
• QINGQING CHEN ET AL: "Characterization of the
bistable ring PUF", DESIGN, AUTOMATION AND
TEST IN EUROPE, EDA CONSORTIUM, 111 WEST
SAINT JOHN STREET, SUITE 220 SAN JOSE CA
95113 USA, 12 March 2012 (2012-03-12), pages
1459-1462, XP058021828, ISBN:
978-3-9810801-8-6

## Description

Embodiments of the present disclosure generally relate to ring circuits of interconnected inverting circuit elements, e.g. osciallator rings or bistable rings, and, more particularly, to apparatuses and methods for observing one or more outputs of the ring's inverting circuit elements.

### Background

Ring circuits of interconnected inverting circuit elements can be divided into two classes, ring oscillators and bistable rings. While a ring oscillator is an inverter ring with an odd number of inverters (N odd), a bistable ring is an inverter ring with an even number of inverters ($N$ even). The present disclosure focuses on bistable rings as a primitive for the construction of Physical Unclonable Functions (PUFs).

PUFs may be used as building blocks in Integrated Circuits (ICs) with a challenge-response interface. Depending on the challenge and the internal physical structure, the PUF generates a unique response. Silicon PUFs may be implemented as dedicated electronic circuits that may be produced using Complementary Metal Oxide Semiconductor (CMOS) technology. During its production, the internal structure of a silicon PUF is influenced by random process variations. These make every PUF unique, which is reflected in its unique challenge-response behavior. Silicon PUFs may be implemented on Application Specific Integrated Circuits (ASICs) or Field Programmable Gate Arrays (FPGAs), for example. They can be used for authentication of a microchip by challenge-response behavior without cryptographic algorithms. Further, they can be used for the generation of a secret cryptographic key in CMOS ICs without non-volatile memory. US 8,848,905 B1 describes a noise reduction concept for noisy PUFs to convert a noisy PUF value to a filtered PUF seed that is stable and repeatable.

Currently, the Bistable Ring PUF (BR PUF) is a promising candidate for a strong Physical Unclonable Function. It is based on inverter rings with an even number of stages called Bistable Rings (BRs) from which a one-bit response may be evaluated to a given challenge. A conventional method to evaluate a response is to use a flip flop to sample one of the inverter outputs in the BR at a fixed time after the BR was released from its initial reset state. However, this method fails when the BR is not settled in a stable state, i.e., it is (still) oscillating. This can severely reduce the reliability of the BR PUF.

Hence, there is a desire to overcome these shortcomings.

### Summary

Some simplifications may be made in the following summary, which is intended to highlight and introduce some aspects of the various example embodiments, but such simplifications are not intended to limit the scope embodiments. Detailed descriptions of preferred example embodiments adequate to allow those of ordinary skill in the art to make and use the inventive concepts will follow in later sections.

According to a first aspect of the present disclosure, embodiments provide apparatus for observing a ring of interconnected inverting circuit elements. In this ring, an output of a first inverting circuit element is coupled to an input of a second inverting circuit element. Respective output signals of the inverting circuit elements are indicative of the ring's present state. The apparatus includes a monitoring module which is configured to monitor, in response to an initial unstable state of the ring,

an output signal of at least one of the inverting circuit elements in at least two observation time instants, or
output signals of at least two of the inverting circuit elements in at least one observation time instant

in order to determine at least two output signal observations. Note that the at least one or the at least two observation time instants may be included in at least one observation time interval. The apparatus further includes a combiner module which is configured to combine the at least two output signal observations to obtain a response quantity in response to the ring's initial unstable state.

A number $N$ of interconnected inverting circuit elements of the ring may be even. Hence, the ring may be a bistable ring with an even number of serially connected inverting circuit elements, wherein an output of a preceding inverting circuit element is coupled to an input of a subsequent inverting circuit element. Thereby, an inverting circuit element may include one or more NOR or NAND gates in example embodiments. In case of more than one NOR or NAND gates per inverting circuit element, the apparatus may be configured to select one of more NOR or NAND gates of an inverting circuit element based on a respective bit value of an input challenge.

In one or more embodiments, the monitoring module is configured to determine the at least two output signal observations after the initial unstable state (e.g. the reset state) of the ring is released, for example, while the ring is still oscillating or when the ring has already settled to a stable state.

As a settling time of the ring may be quite long, the monitoring module may be configured to determine the at least two output signal observations while the ring is still oscillating, i.e., between a release from the initial unstable state and the settling time denoting the time it takes the ring to reach one of its stable states after the release. In this way, the response quantity may be determined quicker before the ring settles to its stable state.

In one embodiment, the monitoring module may be configured to monitor the one or more outputs of the inverting circuit elements time continuously after the initial unstable state of the ring is released.

In another embodiment, the monitoring module may be configured to monitor the one or more outputs time discretely after the initial unstable state of the ring is released.

In some embodiments, the combiner module is configured to determine, as the response quantity, a weighted sum of the at least two observations. For example, the combiner module may be configured to determine the response quantity $\theta$ equivalent to

$$\theta \;=\; \int_{\mathbb{T}} \left(s_N^e\right)^T \cdot \left(x(t) - x^o\right) \; \mathrm{d}t \;,$$

wherein

$$\mathbb{T} \subseteq [t_0, t_s] \,,\;\; t_0 < t_s,\;\; \int_{\mathbb{T}} \mathrm{d}\mu > 0$$

denotes a set of predetermined observations times within a time interval between a release time $t_0$ from the initial unstable state and a stop time $t_s$. Note that the stop time may be before or after the ring's settling time in different embodiments. In the above equation

$$s_N^e = a \cdot s_N^+ \cdot \mathbf{M}_N = a \cdot [+1, -1, \ldots, +1, -1] \cdot \mathbf{M}_N$$

denotes an evaluation state, with $0 \neq a \in \mathbb{R}$ being a scalar factor, $\boldsymbol{s}_N^+ = [1, -1, \ldots, 1, -1]$ being one of two stable states of the ring circuit and $\mathbf{M}_N$ being a mask matrix with entries

$$M_{N_{i,j}} = \begin{cases} m_i \in \{0,1\}, if \; i = j \\ 0, otherwise \end{cases} \,,$$

representing a mask to force components of the evaluation state $s_N{}^e$ not corresponding to the selected at least one output to zero. In the above equation $x^o \in \mathbb{R}^N$ denotes a state offset vector to enable or to compensate a systematic bias in the system. Note that also the other stable state $s_N^- = [-1, +1, \ldots, -1, +1]$ could be used for the above evaluation state.

In some embodiments, the combiner module comprises at least one integrator circuit coupled to at least one output of the inverting circuit elements. Here, the combiner module is configured to integrate the at least two observations of the at least one output or values derived thereof over at least two observation time instants.

In one or more embodiments, the combiner module comprises weighting circuitry coupled to at least one output of the inverting circuit elements. The combiner module is configured to weight a respective output signal of the at least one output.

In some embodiments, the combiner module comprises summing circuitry configured to sum output signals corresponding to outputs of the inverting circuit elements or signals derived thereof.

According to a further aspect of the present disclosure, embodiments provide a method for observing a ring of interconnected inverting circuit elements, wherein an output of a first inverting circuit element is coupled to an input of a second inverting circuit element, and wherein respective output signals of the inverting circuit elements are indicative of the ring's present state. The method includes an act of monitoring, in response to an initial unstable state of the ring, an output signal of at least one of the inverting circuit elements in at least two observation time instants or output signals of at least two of the inverting circuit elements in at least one observation time instant to obtain at least two output signal observations, and an act of combining the at least two output signal observations to obtain a response quantity in response to the ring's initial unstable state.

Some embodiments comprise digital circuitry installed within one or more apparatuses for performing the respective aforementioned methods or individual acts thereof. Such a digital control circuitry, e.g., a Digital Signal Processor (DSP), a Field-Programmable Gate Array (FPGA), an Application-Specific Integrated Circuit (ASIC), or a general purpose processor, needs to be programmed accordingly. Hence, yet further embodiments also provide a computer program having a program code for performing the acts of embodiments of the method, when the computer program is executed on a computer or a programmable hardware device.

Embodiments allow evaluating a response from a (bistable) inverter ring, regardless of whether the inverter ring is settled or oscillating. After the release of the inverter ring from its reset state, the embodiments allow observing multiple (at least one) inverter output(s) in the ring at multiple (at least one) time instant(s) or over (a) continuous time interval(s) and combining all the observations to the response. The increased amount of gathered information may allow to evaluate the response in shorter time, increase its reliability (compared to the state of the art), and also return a response with more than a single bit of information.

Embodiments may be implemented by using standard logic cells. They can thus be implemented on Field Programmable Gate Arrays (FPGAs) as well as on Application Specific Integrated Circuits (ASICs), for example. A use of mixed signal and analog components like Analog to Digital Converters (ADCs) or Operational Amplifiers (OpAmps) may further improve the quality of the response evaluation compared to a standard logic cell implementation.

It may be regarded as another advantage of embodiments that no modification in the structure of the BR itself are required. There may be ways to modify the circuit and/or layout of BR PUFs such that conventional response evaluation concepts can be used. However, not all necessary modifications may be feasible in FPGAs or in a standard cell design flow. Since embodiments can be used in FPGAs and in a standard cell design flow it can be a cheaper design alternative.

Overall, embodiments may significantly increase the reliability, speed and response information of BR PUFs, while allowing low cost implementations and a wide variety of logic devices and technologies including FPGAs.

Brief description of the Figures

Some embodiments of apparatuses and/or methods will be described in the following by way of example only, and with reference to the accompanying figures, in which

Fig. 1          illustrates an example BR PUF architecture,

Fig. 2a, b      show invertor rings with four inverters;

Fig. 3          illustrates a block diagram of an apparatus for observing a ring of interconnected inverting circuit elements;

Fig. 4          shows a schematic flowchart of a method for observing a ring of interconnected inverting circuit elements;

Fig. 5          illustrates a block architecture for evaluating a response from a BR using embodiments of the present invention;

Figs. 6a, b     shows simulation results of BRs with 16 stages;

Fig. 7          illustrates a first example implementation of an apparatus for observing a ring of interconnected inverting circuit elements;

Fig. 8          illustrates a second example implementation of an apparatus for observing a ring of interconnected inverting circuit elements; and

Fig. 9          illustrates a third example implementation of an apparatus for observing a ring of interconnected inverting circuit elements;

Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application-Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

Recently, Chen et al. proposed a new Physical Unclonable Function (PUF) architecture using bistable rings, see Q. Chen, G. Csaba, P. Lugli, U. Schlichtmann, and U. Rührmair: "Characterization of the bistable ring puf", In Design, Automation Test in Europe Conference Exhibition (DATE), 2012, pages 1459 -1462, march 2012, or Q. Chen, G. Csaba, P. Lugli, U. Schlichtmann, and U. Rührmair: "The bistable ring puf: A new architecture for strong physical unclonable functions", In IEEE Int. Symposium on Hardware-Oriented Security and Trust, June 2011.

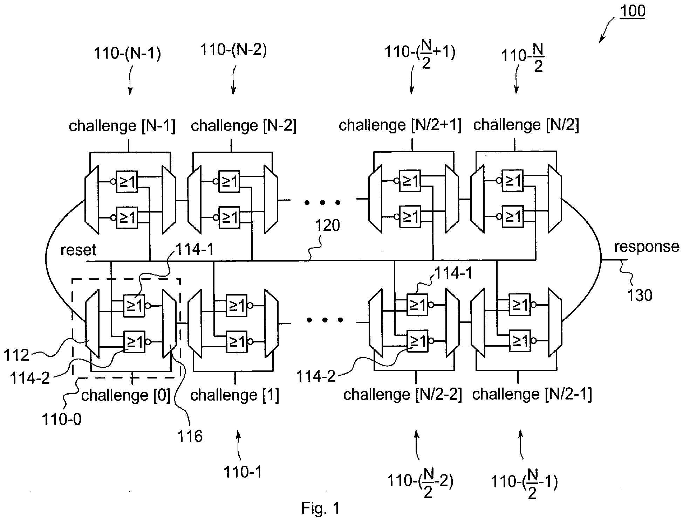

An example architecture of such a Bistable Ring PUF (BR PUF) 100 is shown in **Fig. 1.**

The example BR PUF 100 comprises an even number $N$ of interconnected inverting circuit elements 110-0 to 110-($N$-1) forming a loop. Each inverting circuit element 110 comprises a de-multiplexer 112 coupled to respective inputs of two NOR gates 114-1 and 114-2. The outputs of the NOR gates are coupled to a multiplexer 116. The structure of Fig. 1 allows to couple one of the respective two inputs of each NOR-gate 114-1 and 114-2 to a reset line 120 of the BR PUF 100. By means of the reset line 120 the BR PUF 100 may be brought into an initial unstable state (reset state) of the BR PUF 100. This initial unstable state defined by the outputs of the selected NOR gates may be [1, 1, ..., 1, 1] or [-1, -1, ..., -1, -1], for example, depending the reset signal at the NOR-gates' inputs.

With a challenge c, which is a string of $N$ bits, one out of the two NOR-gates 114-1 and 114-2 per stage 110 may be selected to form the bistable ring. That is to say, depending on the value of *challenge*[0] either NOR-gate 114-1 or NOR-gate 114-2 of inverter stage 110-0 is selected. Likewise, depending on the bit-value of *challenge*[1] either NOR-gate 114-1 or NOR-gate 114-2 of inverter stage 110-2 is selected, and so on. This may be implemented by means of de-multiplexers 112 and multiplexers 116 before and after each stage, for example. All NOR-gates 114 vary in their individual properties due to process variations during manufacture. Hence, the example setup of Fig. 1 allows a configuration of $2^n$ different bistable rings. A one bit response 130 (output of inverting circuit element 110-($n/2$-1)) is evaluated from the bistable ring configured by the given challenge c to form a challenge-response pair. This allows the evaluation of $2^n$ different challenge-response pairs.

The skilled person having benefit from the present disclosure will appreciate that there are various possible circuit implementations to obtain the same or a similar functionality as in the example BR PUF 100 of Fig. 1. For example, the NOR-gates 114 of the inverting circuit elements 110 could be replaced by NAND-gates, XNOR-gates or a combination of NAND-, NOR-, and XNOR gates in some embodiments. In one embodiment, an inverting circuit element 110 could even comprise one or more NOT-gates.

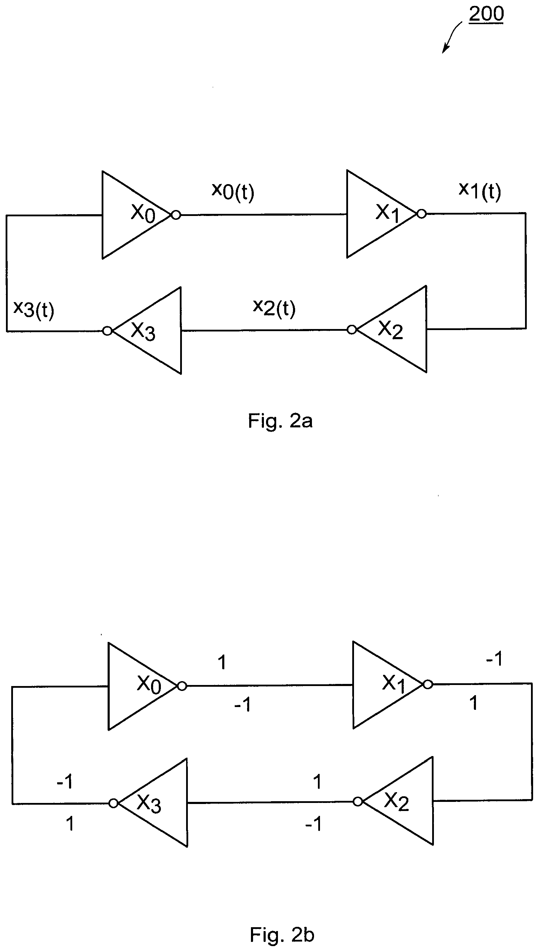

After the inverting circuit elements 110 of BR PUF 100 have been configured with the applied challenge c, it can be regarded as a single bistable ring made of inverters (NOT-gates) instead of NOR-gates ignoring the reset inputs of the NOR-gates. This simplification is useful for understanding the response evaluation process, which the inventive concept described in the present disclosure is improving significantly. As an example, **Fig. 2a** shows such a simplified bistable ring 200 made of, for example, $N = 4$ inverters $X_0$ to $X_3$. The output voltage of each inverter $X_n$ ($n = 0, ..., N$-1) at time $t$ is represented by a state component $x_n(t)$ which may, for example, be normalized to the range [-1, +1] with respect to the ring's 200 negative and positive supply voltage, e.g. $V_{ground}$ and $V_{dd}$.

All state components (recall that a state component is dependent on the output of the respective inverter $X_n$) can be combined in a vector **x** called the state of the ring 200. As the name suggests, bistable rings have the two stable states $s_N^+ = [+1, -1, ... , +1, -1]$ and $s_N^- = [-1, +1, ... , -1, +1]$. **Fig. 2b** illustrates the two stable states for the bistable ring 200 of length $N = 4$. The values of the state components of the stable state $s_4^+$ are written above the connecting lines between the inverters $X_n$. For stable state $s_4^-$ the values are written below the connecting lines.

The response $r$ to a given challenge c may be evaluated from the configured bistable ring 200 by forcing it to an unstable initial state $x_i$ (e.g., by using the reset input 120). Then the bistable ring is released at an initial time $t_0$ and its state **x**($t$) develops over time $t$ starting at the unstable initial state $x_i$. After the release from the initial state, the bistable ring is let run free, e.g. by changing a reset signal of reset line 120 from "low" level to "high" level, or vice versa, and is evaluated at a stop time $t_s > t_0$.

It is assumed after some time the state **x**($t$) of the bistable ring develops towards either one of the two stable states $s_N^+$ or $s_N^-$. When its state **x**($t$) has reached one of them, the bistable ring is said to have settled. The time it takes the ring to settle after the release from the unstable initial state $x_i$ is called the settling time. The stable state $s_N^+$ or $s_N^-$ that it actually settles in is then called the settled state. An information indicative of in which of the two stable states the ring has settled may be taken as the response $r$ to the given challenge $c$. Conventionally, the settled state is determined by evaluating the state component corresponding to a single inverter in the bistable ring at the stoptime $t_s$. As an example, we may assume that for this task the output of inverter $X_0$ is evaluated. Thus, an example response could be $r = X_0(t_s)$.

In order for a PUF to be usable, its responses need to be reliable. A response may be considered reliable, when repeated evaluations for the same challenge always yield the same response value. Conventionally, the response

$r$ may be determined by evaluating the output signal, e.g. the output voltage, of inverter $X_0$ in the ring 200 at the stop time $t_s$. This method can only yield a reliable response when the bistable ring 200 has settled into one of its stable states before the stop time $t_s$. However, the settling time can be very long. After the release from the unstable initial state, the state of bistable ring 200 does not necessarily develop directly towards one of the two stable states. In fact, it can show oscillatory behavior. This means for the state component $x_0(t)$ corresponding to inverter $X_0$, that its value oscillates over time between -1 and +1. Due to phase noise in the oscillation and frequency shifts over operating conditions, it cannot be assumed that $x_0(t_s)$ at the stop time $t_s$ is always the same in repeated runs. Thus, the evaluated response will be unreliable.

Oscillations in bistable rings can extend for a very long time before the ring settles. Thus, in order to achieve an acceptable reliability, the stop time would have to be increased making the challenge-response evaluation process unacceptably slow. This may be a severe drawback of this response evaluation method.

Example embodiments of the invention described in this disclosure allow to evaluate response information from an inverter ring, which may be a bistable ring, regardless of whether the inverter ring is settled or oscillating. Note that some embodiments may even be useful for obtaining challenge-response pairs of ring oscillators.

For this purpose, it is proposed an apparatus 300 for observing ring 200 of interconnected inverting circuit elements 210, wherein an output of a first inverting circuit element 210-$n$ ($n = 0, ..., N$-1) is coupled to an input of a second inverting circuit element 210-($n$+1). Respective outputs 212 of the inverting circuit elements 210 are indicative of the ring's present state. For bistable rings the integer $N$ would be even.

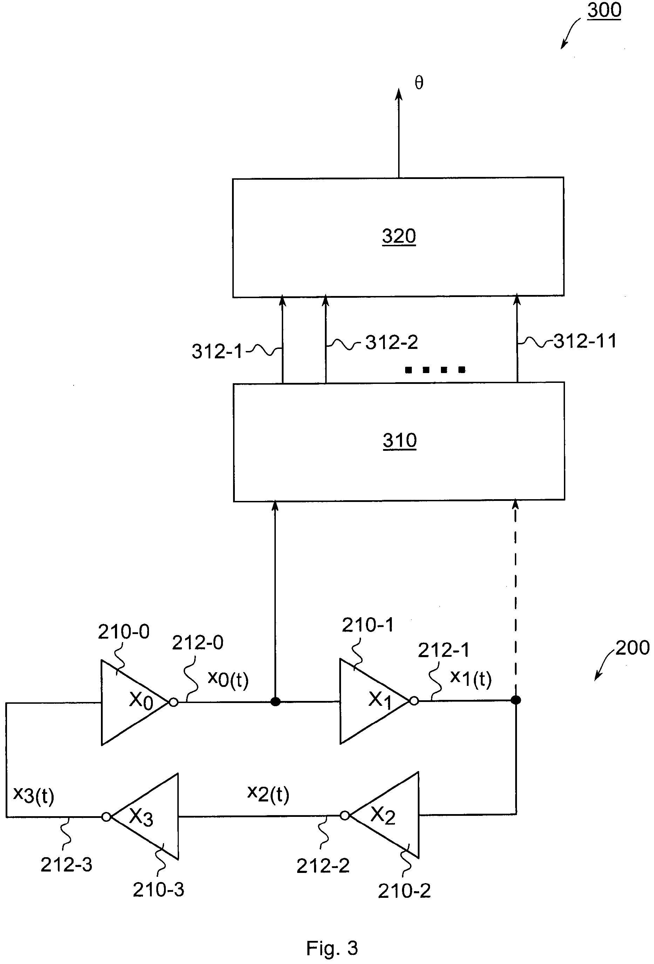

A schematic example of apparatus 300 is illustrated in **Fig. 3.** The apparatus 300 comprises a monitoring module 310 which is configured to monitor or receive, in response to an initial unstable state $\mathbf{x}_i$ of the ring 200,

> i) an output 212-$n$ of at least one of the inverting circuit elements 210 in at least two different observation time instants $t_1$ and $t_2$, and/or
> ii) at least two outputs 212-$x$, 212-$y$ in at least one observation time instant

in order to determine at least two observations 312-1, 312-2, ..., 312-$M$ ($M \geq 2$). Further, apparatus 300 includes a combiner module 320 which is configured to combine the at least two observations 312-1, 312-2, ..., 312-$M$ to obtain a response quantity $\theta$ in response to the ring's 200 initial unstable state $\mathbf{x}_i$.

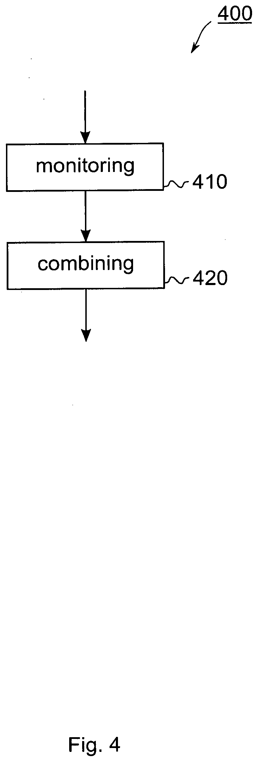

The skilled person having benefit from the present disclosure will appreciate that apparatus 300 may be configured by hardware and/or by software to perform an according method. A pure hardware configuration of apparatus 300 may, for example, be implemented by one or more ASICs. In other example embodiments, apparatus 300 or parts thereof may be implemented by one or more accordingly programmed FPGAs to perform one or more acts of the method, a schematic flowchart of which is illustrated in **Fig. 4.**

An embodiment of a method 400 for observing a ring 200 of interconnected inverting circuit elements 210 includes an act 410 of monitoring or sampling, in response to an initial unstable state of the ring 200,

> i) an output 212-$n$ ($n = 0, ..., N$-1) of at least one of the inverting circuit elements 210 in at least two different observation time instants $t_1$ and $t_2$, and/or
> ii) at least two outputs 212-$x$, 212-$y$ in at least one observation time instant

to obtain at least two observations (e.g. signals) 312-1, 312-2, ..., 312-$M$ ($M \geq 2$) of the one or more outputs. Further, method 400 includes and an act 420 of combining the at least two observations to obtain a response quantity $\theta$ in response to the ring's initial unstable state.

In embodiments, monitoring an output may include acts like sensing or measuring a respective output signal. For further digital processing, monitoring may also include sampling the respective output signal to obtain a digital value thereof.

The combination of the at least two observation values may include a variety of linear and/or nonlinear combinations of the at least two observation values to obtain a unique "fingerprint" of the ring 100, 200. Some examples are weighted sums, products, or divisions of the at least two observation values. The combination can be performed in the analog domain or the digital domain, depending on the implementation.

This following section presents a possible mathematical description of the principle(s) underlying various embodiments.

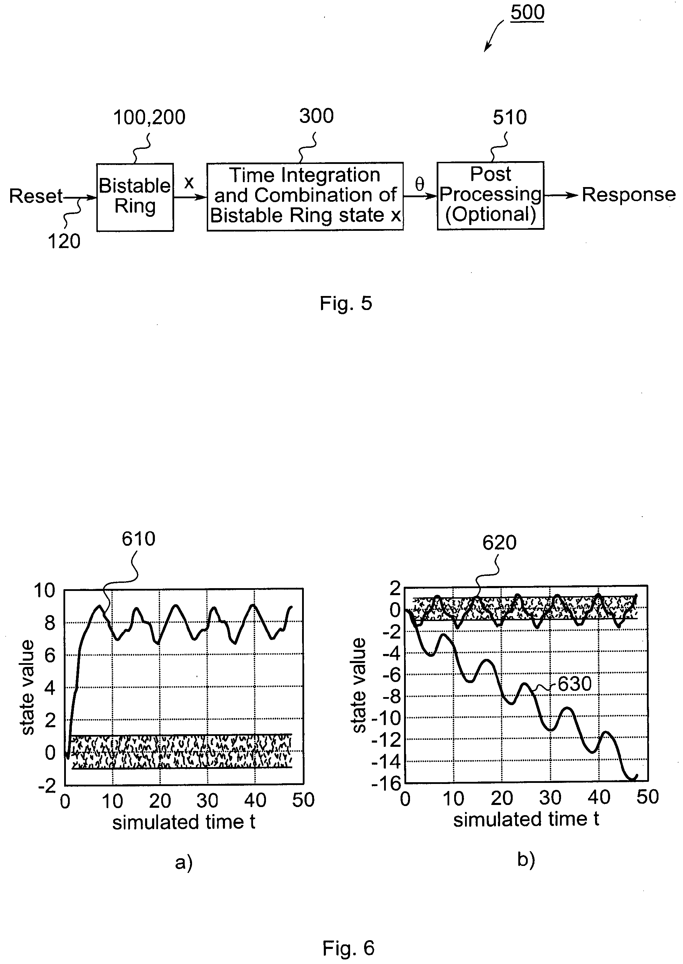

Fig. 5 shows a schematic block architecture 500 for the evaluation of a response from a bistable ring 100, 200 using the disclosed concept. Until the beginning of a response evaluation, a bistable ring 100, 200 may be held in reset using its reset input 120. After the release of the reset, the bistable ring 100, 200 starts from the unstable initial state $\mathbf{x}_i$ at the initial time to. Embodiments may observe at least one state component of the bistable ring state $\mathbf{x}(t)$ at at least one time instant or over (a) continuous time interval(s) and may combine all the observations to the response value $\theta$, which may be a single scalar value. The response value $\theta$ can be used directly as the response $r$, or $r$ can be extracted

from $\theta$ by applying some additional digital and/or analog post processing 510. For example, post processing 510 may derive probabilities for one or both stable states even before the ring has settled. For another example, post processing 510 may generate a repeatable but non-predictable bit-sequence from one or more response values $\theta$. The one or more response values $\theta$ may result from one or more challenges.

Note that in the following mathematical description the voltages or currents in an actual electronic circuit implementation are represented by normalized values within +1 and -1, where the values +1 and -1 may correspond to the positive supply voltage and the negative supply voltage (or ground), for example.

Definitions:

- BR state at time $t$

$$\mathbf{x}(t) \in \mathbb{R}^N \tag{1}$$

- BR state offset vector

$$\mathbf{x}^o \in \mathbb{R}^N \tag{2}$$

- Mask matrix: diagonal matrix $\mathbf{M}_N$ as mask for the state components

$$M_{N_{i,j}} = \begin{cases} m_i \in \{0,1\}, if\ i = j \\ \quad 0, otherwise \end{cases} \tag{3}$$

where $i, j \in \{0, \dots, N-1\}$ and $\sum_{i=1}^{N-1} m_i \geq 1$. $\mathbf{M}_4$ for the example of Figs. 2a, b with only one state component of

interest ($X_0$) would be $M_4 = \begin{vmatrix} 1 & 0 & 0 & 0 \\ 0 & 0 & 0 & 0 \\ 0 & 0 & 0 & 0 \\ 0 & 0 & 0 & 0 \end{vmatrix}$.

- Evaluation state

$$s_N^e = a \cdot s_N^+ \cdot \mathbf{M}_N = a \cdot [+1, -1, \dots, +1, -1] \cdot \mathbf{M}_N \tag{4}$$

where $0 \neq a \in \mathbb{R}$ is a scalar factor, $s_N^+ = [1, -1, \dots, 1, -1]$ is one of two stable states of the ring circuit and $\mathbf{M}_N$ being the mask matrix which represents a mask that allows to force certain components of the evaluation state $s_N^e$ to zero. This means that the corresponding component in the BR state x is not observed. However, there should be always at least one observed state component left.

- Start time: time instant at the start of the evaluation when the BR is released from the initial state

$$t_0 \in \mathbb{R} \tag{5}$$

- Stop time: time instant when the evaluation is terminated and after which the BR is reset to the initial state

$$t_s \in \mathbb{R} \tag{6}$$

- Set of observation times

$$\mathbb{T} \subseteq [t_0, t_s],\ t_0 < t_s,\ \int_{\mathbb{T}} \mathrm{d}\mu > 0 \tag{7}$$

Hence, the monitoring module 310 may be configured to determine the at least two observations after the initial unstable state of the ring is released at time to. The stop time $t_s$ may be smaller than the settling time. In such cases the monitoring module is configured to determine the at least two observations between the release from the initial unstable state and the settling time denoting a time it takes the ring to reach a stable state after the release. In some embodiments, the set $\mathbb{T}$ may contain continuous time intervals. However, the skilled person having benefit from the present disclosure will appreciate that the principles of the present invention may also be applied to discrete time instants. Hence, the monitoring module may be configured to observe the at least one output continuously or discretely within a time interval between a release from the initial unstable state and a stop time.

The following equation describes mathematically how example embodiments may solve the evaluation of the response value $\theta$ from the BR. Generally, the combiner module 320 may be configured to determine, as the response quantity $\theta$, a weighted sum of the at least two observations of the at least one output signal. In particular, the combiner module 320 may be configured to determine $\theta$ according to

$$\theta = \int_{\mathbb{T}} (s_N^e)^T \cdot (\mathbf{x}(t) - \mathbf{x}^o)dt = (s_N^e)^T \cdot \int_{\mathbb{T}} (\mathbf{x}(t) - \mathbf{x}^o)dt \qquad (8)$$

The state x($t$) may be integrated over the observation times in the observation time set $\mathbb{T}$. The dot product with the evaluation state $s_N^e$ may be used to get a scalar value for the result.

The state offset vector $\mathbf{x}^o$ may be used to represent any possible offsets present or necessary in an actual hardware implementation of the described response evaluation. The offsets may, for example, correspond to threshold voltages in flip-flops of employed circuitry or the like.

From the response value $\theta$ the actual response $r$ may be derived by either using $\theta$ directly as the response without any further processing, or by applying some form of post processing on $\theta$, e.g. error correction.

Embodiments of the present invention combine two ideas to improve the reliability of the evaluated responses over that of the state of the art:

1. Integration or summation of observations over the set of observation times $\mathbb{T}$
2. Dot product with the evaluation state $s_N^e$

By integrating the bistable ring state $\mathbf{x}$ over time, the relative influence of oscillations on the value of the integral may be attenuated, while the relative influence of a bias towards a stable state may be accumulated. Given that the bias is non-zero the set of observation times $\mathbb{T}$ can be adjusted such that the resulting value of the integral is dominated by the accumulated bias over the disturbances from oscillations.

Building the dot product of the BR state $\mathbf{x}$ allows to estimate how strong a tendency towards the evaluation state is at the very time instant of the observation. Note that for this no information about past or future states needs to be used. The evaluation state can be chosen such that the dot product of the BR state x with the evaluation state $s_N^e$ yields a value for the tendency towards a stable state. This value can be less sensitive to oscillations than the observation of a single component of the BR state.

**Figs. 6a, b** shows transient simulations of a simple computer model of different 16 stage BRs. The individual state components $x_0$ to $x_{15}$ are plotted as dashed lines. Note that the both simulated BRs are continuously oscillating.

In **Fig**. **6a** the combination $(s_{16}^e)^T \mathbf{x}$ of all 16 state components using $s_{16}^e = s_{16}^+$ is plotted as thick line 610. This value lies in the range from -16 to +16. Note that after an initial ramp up the trace oscillates around a value of approximately 8 with an amplitude $a$ of approximately 1. The relative oscillation amplitude with respect to the value range is $a_r = \frac{1}{16-(-16)} = \frac{1}{32}$. This is much smaller compared to that of the relative oscillation amplitude of the individual state components which is $a_r = \frac{1}{1-(-1)} = \frac{1}{2}$.

**Fig. 6b** shows the transient simulation of a different BR. The combination $(s_{16}^e)^T \cdot \mathbf{x}$ of all 16 state components using $s_{16}^e = s_{16}^+$ is plotted as thick line 620. This time the resulting value oscillates around approximately 0 again with an amplitude $a$ of approximately 1. Additionally the time integration of the combination value $\int_0^t (s_{16}^e)^T \cdot \mathbf{x}(t)dt$ is

shown as thick line 630. This value lies in a range that depends on the current time $t$, i.e. $\pm 16 \cdot t$. Note that the integrated value oscillates around a steadily decreasing value. However, the oscillation amplitude $a$ remains constant at approximately 1. Hence, the relative oscillation amplitude is $a_r = \dfrac{a}{2 \cdot 16 \cdot t} = \dfrac{1}{32 \cdot t}$ steadily decreasing, as the value range is increasing with time.

Thus, using time integration the relative oscillation amplitude can be made arbitrarily small by increasing the stop time $t_s$. Using the combination of the state components on top of this, the relative oscillation amplitude can be further reduced by some factor which does not scale with the stop time. This allows to extract much more information from a single evaluation run than with conventional methods.

The linearity of the integral in equation (8) and the dot product allows a variety of different equivalent basic signal flows to implement equation (8).

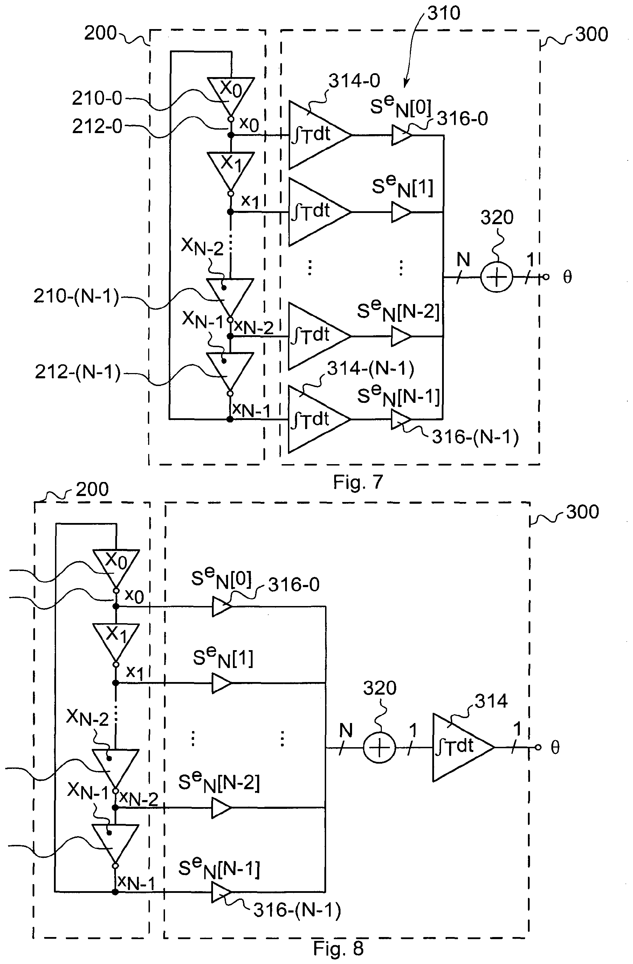

In a first example implementation, each state component, i.e., each inverting stage's output signal, may be integrated separately over time. Then, each integrated state component may be multiplied with its corresponding weight factor in $\boldsymbol{s}_N^e$. Finally, the integrated and weighted state components may be summed up. An according example circuitry is illustrated in **Fig. 7**.

Fig. 7 illustrates circuitry 300 for observing a ring 200 of interconnected inverting circuit elements 210. Output 212-0 of inverting circuit element 210-0 is coupled to input of subsequent inverting circuit element 210-1. Output 212-1 of inverting circuit element 210-1 is coupled to input of subsequent inverting circuit element 210-2, and so on. To close the loop, output 212-($N$-1) of inverting circuit element 210-($N$-1) is coupled to input of inverting circuit element 210-0. The respective outputs 212 of the inverting circuit elements 210 are indicative of the ring's present state $\mathbf{x}(t)$. Monitoring circuitry 310 comprises a number of integrator circuits 314-0 to 314-($N$-1) coupled to the 212-0 to 212-($N$-1). The number of integrator circuits 314-0 to 314-($N$-1) corresponds to the number of outputs 212-0 to 212-($N$-1) in this example embodiment. Each of the integrator circuits 314-0 to 314-($N$-1) may be configured to integrate at least two observations of its corresponding output 212-0 to 212-($N$-1) or values derived thereof over at least two observation time instants. The individual integrated values may then be amplified by respective amplifier circuits 316-0 to 316-($N$-1). Their respective amplification corresponds to the corresponding weight factor in $\boldsymbol{s}_N^e$. The outputs of the amplifier circuits 316-0 to 316-($N$-1) may then be fed to summing or adding circuitry 320.

In a second example implementation, each state component may be multiplied with its corresponding weight in $\boldsymbol{s}_N^e$. Then, the weighted state components may be summed up. Finally, the weighted sum of state components may be integrated over time. An according example circuitry is illustrated in **Fig. 8.**

Fig. 8 illustrates a different embodiment of circuitry 300 for observing the ring 200 of interconnected inverting circuit elements 210. The respective outputs 212 of the inverting circuit elements 210 are indicative of the ring's present state $\mathbf{x}(t)$. Here, monitoring circuitry 310 comprises a number of amplifier circuits 316-0 to 316-($N$-1) directly coupled to respective outputs 212-0 to 212-($N$-1). Generally, the number of amplifier circuits 316-0 to 316-($N$-1) may correspond to the number of outputs 212-0 to 212-($N$-1). Each of the amplifier circuits 316-0 to 316-($N$-1) amplifies its associated inverter output corresponding to the associated weight factor in $\boldsymbol{s}_N^e$. The outputs of the amplifier circuits 316-0 to 316-($N$-1) may then be fed to summing or adding circuitry 320. The summed output of summing circuitry 320 may be fed to a downstream integrator 314 in order to obtain the response quantity $\theta$. In contrast to Fig. 7, the embodiment of Fig. 8 makes use of only one integrator.

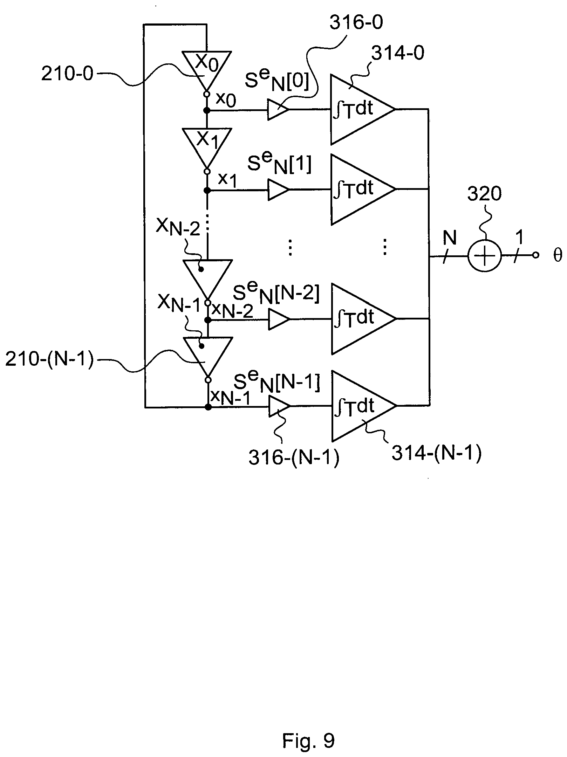

According to yet a further possible implementation, each state component may be multiplied with its corresponding weight in $\boldsymbol{s}_N^e$. Then, each weighted state component may be integrated separately over time. Finally, the weighted and integrated state components may be summed up. An according example circuit is illustrated in Fig. 9, which differs from Fig. 7 only by a reversed order of the amplifiers 316 and integrators 314.

The skilled person having benefit from the present disclosure will appreciate that there are many more possible implementations of equation (8) making use of analog and/digital circuitry. Implementations using a combination of analog and digital circuits may be used to approximate the signal flows of Fig. 7-9. The different implementations can vary in their approximation precision. Basic building blocks may be:

- Integration amplifier (time integration)
- Unity gain buffer to avoid low impedance loading of the stage outputs
- Summing (difference) amplifier (combining all inverter output measurements)
- Analog-to-Digital Converters (ADCs)
- Signal processing logic

The use of ADCs causes signals to become quantized in both time and value. In the signal flow after the ADC processing is done in the digital domain. There are various options where to place an ADC stage in the different possible signal flows:

- Directly sampling each state component (stage output voltage) with ADCs

  - Time integration and combination of state components done in digital domain
  - Suitable for FPGA implementations using flip flops as ADCs
  - Signal flows according to Figs. 7 - 9 possible

- All analog circuitry implementing one of the signal flows followed by one ADC to sample the output voltage which represents the response value $\theta$.

  - Time integration and combination of state components done in analog domain
  - Signal flows according to Figs. 7 - 9 possible

- Intermediate

  - E.g. in the signal flow according to Fig. 8 after the combination of state components, before the time integration
  - Combination of state components in analog domain
  - Time integration in digital domain

Embodiments may be useful in applications as PUF based challenge response authentication or PUF based key generation/embedding, for example. For the mentioned applications the reliability of the responses is critical for their performance. Embodiments may enable a useable reliability for the mentioned applications. Furthermore, embodiments may allow to extract more information per evaluation run than conventional methods.

With embodiments of the present disclosure a response can be evaluated from a BR even when it is oscillating, which is not possible with the state of the art method. Hence, this allows to speed up the response evaluation. Embodiments may yield an increased signal to noise ratio in the evaluated response value $\theta$. This allows to apply post processing to improve the reliability and information content of the extracted response $r$ compared to the state of the art. Also, more information can be extracted per response evaluation run due to the increased signal to noise ratio of the response value $\theta$.

The description and drawings merely illustrate the principles of embodiments the invention. It will thus be appreciated that those skilled in the art will be able to devise various arrangements that, although not explicitly described or shown herein, embody the principles of example embodiments. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative hardware or circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

Further, it is to be understood that the disclosure of multiple acts or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

**Claims**

1. Apparatus (300) for observing a ring (100; 200) of interconnected inverting circuit elements (110; 210), wherein an output of a first inverting circuit element is coupled to an input of a second inverting circuit element, wherein respective output signals of the inverting circuit elements are indicative of the ring's present state, the apparatus comprising:

   a monitoring module (310) configured to monitor, in response to an initial unstable state of the ring (100; 200), an output signal of at least one of the inverting circuit elements (110; 210) in at least two observation time instants or output signals of at least two of the inverting circuit elements in at least one observation time instant to obtain at least two output signal observation values (312), wherein the monitoring module (310) is configured to observe at least one output continuously or discretely within a time interval between a release from the initial unstable state and a settling time denoting a time it takes the ring circuit to reach a stable state after the release; and
   a combiner module (320) configured to combine the at least two output signal observation values (312) to obtain a response value in response to the ring's initial unstable state.

2. The apparatus (300) of claim 1, wherein the combiner module (320) is configured to determine, as the response value, a weighted sum of the at least two output signal observation values.

3. The apparatus (300) of claim 1 or 2, wherein the combiner module (320) is configured to determine the response value $\theta$ equivalent to

$$\theta \ = \ \int_{\mathbb{T}} (s_N^e)^T \cdot (x(t) - x^o) \ \mathrm{d}t$$

,

   wherein

$$\mathbb{T} \subseteq [t_0, t_s] , \ t_0 < t_s, \ \int_{\mathbb{T}} \mathrm{d}\mu > 0$$

   denotes a set of observations times including the at least two time instants within a time interval between a release time $t_0$ from the initial unstable state and a stop time $t_s$, wherein

$$\boldsymbol{s_N^e} = \boldsymbol{a} \cdot \boldsymbol{s_N^+} \cdot \mathbf{M}_N = \boldsymbol{a} \cdot [\boldsymbol{+1, -1, \dots, +1, -1}] \cdot \mathbf{M}_N$$

   denotes an evaluation state, with $0 \neq a \in \mathbb{R}$ being a scalar factor, $\boldsymbol{s_N^+}$ being one of two stable states of the ring circuit and $\mathbf{M}_N$ being a mask matrix with

$$M_{N_{i,j}} = \begin{cases} \boldsymbol{m_i \in \{0, 1\}, if \ i = j}, \\ \boldsymbol{0, otherwise} \end{cases},$$

   representing a mask to force components of the evaluation state $\boldsymbol{s_N^e}$ not corresponding to the at least one output to zero, and wherein $x^o \in \mathbb{R}^N$ denotes a state offset vector taking into account threshold values of the ring circuit.

4. The apparatus (300) of one of the preceding claims, wherein the combiner module (320) comprises at least one integrator circuit (314) coupled to at least one output (212) of the inverting circuit elements (210) and wherein the combiner module (320) is configured to integrate the at least two output signal observation values or values derived thereof over at least two observation time instants.

5. The apparatus (300) of one of the preceding claims, wherein the combiner module (320) comprises weighting circuitry (316) coupled to the at least one output (212) of the inverting circuit elements (210) and configured to weight a respective output signal of the at least one output.

6. The apparatus (300) of one of the preceding claims, wherein the combiner module (320) comprises summing circuitry configured to sum output signals corresponding to outputs of the inverting circuit elements or signals derived thereof.

7. The apparatus (300) of one of the preceding claims, wherein the ring (100; 200) is a bistable ring having an even number of serially interconnected inverting circuit elements (110; 210), wherein an output of a preceding inverting circuit element is coupled to an input of a subsequent inverting circuit element.

8. The apparatus (300) of one of the preceding claims, wherein an inverting circuit element (110; 210) comprises one or more NOR or NAND gates.

9. The apparatus (300) of claim 8, wherein the apparatus is configured to select a NOR or NAND gate of an inverting circuit element (110; 210) based on a respective bit value of an input challenge.

10. Method (400) for observing a ring (100; 200) of interconnected inverting circuit elements (110; 210), wherein an output of a first inverting circuit element is coupled to an input of a second inverting circuit element, wherein respective output signals of the inverting circuit elements are indicative of the ring's present state, the method comprising:

   monitoring (410), in response to an initial unstable state of the ring, an output signal of at least one of the inverting circuit elements (110; 210) in at least two observation time instants or output signals of at least two of the inverting circuit elements in at least one observation time instant to obtain at least two output signal observation values, wherein the monitoring comprises observing at least one output continuously or discretely within a time interval between a release from the initial unstable state and a settling time denoting a time it takes the ring circuit to reach a stable state after the release; and
   combining (420) the at least two output signal observation values to obtain a response value in response to the ring's initial unstable state.

11. Computer program having a program code for performing one or more acts of the method (400) of claim 10, when the computer program is executed on a programmable hardware device.

**Patentansprüche**

1. Eine Vorrichtung (300) zum Beobachten eines Rings (100; 200) von verschalteten invertierenden Schaltungselementen (110; 210), wobei ein Ausgang eines ersten invertierenden Schaltungselements mit einem Eingang eines zweiten invertierenden Schaltungselements gekoppelt ist, wobei jeweilige Ausgangssignale der invertierenden Schaltungselemente den gegenwärtigen Zustand des Rings anzeigen, die Vorrichtung umfassend:

   ein Überwachungsmodul (310), das ausgebildet ist zum Überwachen, ansprechend auf einen anfänglichen instabilen Zustand des Rings (100; 200), eines Ausgangssignals von zumindest einem von den invertierenden Schaltungselementen (110; 210) zu zumindest zwei Beobachtungszeitpunkten oder von Ausgangssignalen von zumindest zwei von den invertierenden Schaltungselementen zu zumindest einem Beobachtungszeitpunkt, um zumindest zwei Ausgangssignalbeobachtungswerte (312) zu erhalten, wobei das Überwachungsmodul (310) ausgebildet ist zum kontinuierlichen oder diskreten Beobachten von zumindest einem Ausgang innerhalb eines Zeitintervalls zwischen einer Freigabe von dem anfänglichen instabilen Zustand und einer Einschwingzeit, die eine Zeit bezeichnet, die die Ringschaltung benötigt, um nach der Freigabe einen stabilen Zustand zu erreichen; und
   ein Kombinatormodul (320), das ausgebildet ist zum Kombinieren der zumindest zwei Ausgangssignalbeobachtungswerte (312), um einen Antwortwert ansprechend auf den anfänglichen instabilen Zustand des Rings zu erhalten.

2. Die Vorrichtung (300) gemäß Anspruch 1, wobei das Kombinatormodul (320) ausgebildet ist zum Bestimmen einer gewichteten Summe von den zumindest zwei Ausgangssignalbeobachtungswerten als den Antwortwert.

3. Die Vorrichtung (300) gemäß Anspruch 1 oder 2, wobei das Kombinatormodul (320) ausgebildet ist zum Bestimmen des Antwortwertes $\theta$, der gleichwertig ist zu

$$\theta \;=\; \int_{\mathbb{T}} (s_N^e)^T \cdot (x(t) - x^o) \; \mathrm{d}t \,,$$

wobei

$$\mathbb{T} \subseteq [t_0, t_{\mathrm{s}}]\,,\; t_0 < t_{\mathrm{s}},\; \int_{\mathbb{T}} \mathrm{d}\mu > 0$$

eine Menge von Beobachtungszeiten bezeichnet, umfassend die zumindest zwei Zeitpunkte innerhalb eines Zeitintervalls zwischen einer Freigabezeit to von dem anfänglichen instabilen Zustand und einer Stoppzeit $t_s$, wobei

$$s_N^e = a \cdot s_N^+ \cdot \mathbf{M}_N = a \cdot [+1, -1, \ldots, +1, -1] \cdot \mathbf{M}_N$$

einen Bewertungszustand bezeichnet, wobei $0 \neq a \in \mathbb{R}$ ein skalarer Faktor ist, wobei $s_N^+$ einer von zwei stabilen Zuständen der Ringschaltung ist und wobei $\mathbf{M}_N$ eine Maskenmatrix ist mit

$$M_{N_{i,j}} = \begin{cases} m_i \in \{0, 1\}, wenn\; i = j \\ \quad 0, ansonsten \end{cases},$$

die eine Maske repräsentiert, um Komponenten des Bewertungszustands $s_N^e$, die nicht dem zumindest einen Ausgang entsprechen, auf Null zu zwingen, und wobei $x^o \in \mathbb{R}^N$ einen Zustandsversatzvektor bezeichnet, der Schwellenwerte der Ringschaltung berücksichtigt.

4. Die Vorrichtung (300) gemäß einem der vorangehenden Ansprüche, wobei das Kombinatormodul (320) zumindest eine Integratorschaltung (314) umfasst, die mit zumindest einem Ausgang (212) der invertierenden Schaltungselemente (210) gekoppelt ist, und wobei das Kombinatormodul (320) ausgebildet ist zum Integrieren von den zumindest zwei Ausgangssignalbeobachtungswerten oder Werten, die von denselben hergeleitet sind, über zumindest zwei Zeitbeobachtungszeitpunkte.

5. Die Vorrichtung (300) gemäß einem der vorangehenden Ansprüche, wobei das Kombinatormodul (320) eine Gewichtungsschaltungsanordnung (316) umfasst, die mit dem zumindest einen Ausgang (212) der invertierenden Schaltungselemente (210) gekoppelt ist und die ausgebildet ist zum Gewichten eines jeweiligen Ausgangssignals des zumindest einen Ausgangs.

6. Die Vorrichtung (300) gemäß einem der vorangehenden Ansprüche, wobei das Kombinatormodul (320) eine Summierungsschaltungsanordnung umfasst, die ausgebildet ist zum Summieren von Ausgangssignalen, die Ausgängen der invertierenden Schaltungselemente oder Signalen, die von denselben hergeleitet sind, entsprechen.

7. Die Vorrichtung (300) gemäß einem der vorangehenden Ansprüche, wobei der Ring (100; 200) ein bistabiler Ring mit einer geraden Anzahl von seriell verschalteten, invertierenden Schaltungselementen (110; 210) ist, wobei ein Ausgang eines vorangehenden invertierenden Schaltungselements mit einem Eingang eines nachfolgenden invertierenden Schaltungselements gekoppelt ist.

8. Die Vorrichtung (300) gemäß einem der vorangehenden Ansprüche, wobei ein invertierendes Schaltungselement (110; 210) ein oder mehrere NOR- oder NAND-Gates umfasst.

9. Die Vorrichtung (300) gemäß Anspruch 8, wobei die Vorrichtung ausgebildet ist zum Auswählen eines NOR- oder NAND-Gates eines invertierenden Schaltungselements (110; 210) basierend auf einem jeweiligen Bit-Wert einer Eingangsabfrage.

10. Ein Verfahren (400) zum Beobachten eines Rings (100; 200) von verschalteten invertierenden Schaltungselementen (110; 210), wobei ein Ausgang eines ersten invertierenden Schaltungselements mit einem Eingang eines zweiten invertierenden Schaltungselements gekoppelt ist, wobei jeweilige Ausgangssignale der invertierenden Schaltungselemente den gegenwärtigen Zustand des Rings anzeigen, das Verfahren umfassend:

ansprechend auf einen anfänglichen instabilen Zustand des Rings, ein Überwachen (410) eines Ausgangssignals von zumindest einem von den invertierenden Schaltungselementen (110; 210) zu zumindest zwei Beobachtungszeitpunkten oder von Ausgangssignalen von zumindest zwei von den invertierenden Schaltungselementen zu zumindest einem Beobachtungszeitpunkt, um zumindest zwei Ausgangssignalbeobachtungswerte zu erhalten, wobei das Überwachen ein kontinuierliches oder diskretes Beobachten von zumindest einem Ausgang innerhalb eines Zeitintervalls zwischen einer Freigabe von dem anfänglichen instabilen Zustand und einer Einschwingzeit, die eine Zeit bezeichnet, die die Ringschaltung benötigt, um nach der Freigabe einen stabilen Zustand zu erreichen, umfasst; und

Kombinieren (420) der zumindest zwei Ausgangssignalbeobachtungswerte, um einen Antwortwert ansprechend auf den anfänglichen instabilen Wert des Rings zu erhalten.

**11.** Ein Computerprogramm mit einem Programmcode zum Ausführen von einem oder mehreren Schritten des Verfahrens (400) gemäß Anspruch 10, wenn das Computerprogramm auf einer programmierbaren Hardwareeinrichtung ausgeführt wird.

## Revendications

**1.** Appareil (300) pour observer un anneau (100 ; 200) d'éléments de circuit inverseurs interconnectés (110 ; 210), dans lequel une sortie d'un premier élément de circuit inverseur est couplée à une entrée d'un second élément de circuit inverseur, dans lequel des signaux de sortie respectifs des éléments de circuit inverseurs indiquent l'état actuel de l'anneau, l'appareil comprenant :

un module de surveillance (310) configuré pour surveiller, en réponse à un état initial instable de l'anneau (100 ; 200), un signal de sortie d'au moins un des éléments de circuit inverseurs (110 ; 210) dans au moins deux instants de temps d'observation ou des signaux de sortie d'au moins deux des éléments de circuit inverseurs dans au moins un instant de temps d'observation pour obtenir au moins deux valeurs d'observation de signal de sortie (312), dans lequel le module de surveillance (310) est configuré pour observer au moins une sortie en continu ou discrètement dans un intervalle de temps entre une libération de l'état initial instable et un temps de stabilisation désignant un temps qu'il faut au circuit en anneau pour atteindre un état stable après le libération; et

un module combinateur (320) configuré pour combiner les au moins deux valeurs d'observation de signal de sortie (312) pour obtenir une valeur de réponse en réponse à l'état initial instable de l'anneau.

**2.** Appareil (300) selon la revendication 1, dans lequel le module combinateur (320) est configuré pour déterminer, en tant que valeur de réponse, une somme pondérée des au moins deux valeurs d'observation de signal de sortie.

**3.** Appareil (300) selon la revendication 1 ou 2, dans lequel le module combinateur (320) est configuré pour déterminer la valeur de réponse $\theta$ équivalente à

$$\theta \;=\; \int_{\mathbb{T}} (s_N^e)^T \cdot (x(t) - x^o) \; \mathrm{d}t \, ,$$

dans lequel

$$\mathbb{T} \subseteq [t_0, t_s] \,, \;\; t_0 < t_s, \; \int_{\mathbb{T}} \mathrm{d}\mu > 0$$

désigne un ensemble de temps d'observation comprenant les au moins deux instants de temps dans un intervalle de temps entre un temps de libération $t_0$ de l'état initial instable et un temps d'arrêt $t_s$, dans lequel

$$s_N^e = a \cdot s_N^+ \cdot \mathbf{M}_N = a \cdot [+1, -1, \ldots, +1, -1] \cdot \mathbf{M}_N$$

désigne un état d'évaluation, avec $0 \neq a \in \mathbb{R}$ étant un facteur scalaire, $s_N^+$ étant l'un des deux états stables du circuit en anneau et $\mathbf{M}_N$ étant une matrice de masque avec

$$M_{N_{i,j}} = \begin{cases} m_i \in \{0, 1.\}, si\ i = j, \\ 0, sinon \end{cases},$$

représentant un masque pour forcer les composantes de l'état d'évaluation $s_N^e$ qui ne correspondent pas à la au moins une sortie à zéro, et dans lequel $x^o \in \mathbb{R}^N$ désigne un vecteur de décalage d'état prenant en compte des valeurs de seuil du circuit en anneau.

4. Appareil (300) selon l'une des revendications précédentes, dans lequel le module combinateur (320) comprend au moins un circuit intégrateur (314) couplé à au moins une sortie (212) des éléments de circuit inverseurs (210) et dans lequel le module combinateur (320) est configuré pour intégrer les au moins deux valeurs d'observation de signal de sortie ou des valeurs dérivées de celles-ci pour au moins deux instants de temps d'observation.

5. Appareil (300) selon l'une des revendications précédentes, dans lequel le module combinateur (320) comprend un circuit de pondération (316) couplé à la au moins une sortie (212) des éléments de circuit inverseurs (210) et configuré pour pondérer un signal de sortie respectif de la au moins une sortie.

6. Appareil (300) selon l'une des revendications précédentes, dans lequel le module combinateur (320) comprend un circuit sommateur configuré pour faire la somme des signaux de sortie correspondant aux sorties des éléments de circuit inverseurs ou signaux dérivés de ceux-ci.

7. Appareil (300) selon l'une des revendications précédentes, dans lequel l'anneau (100 ; 200) est un anneau bistable comprenant un nombre pair d'éléments de circuit inverseurs interconnectés en série (110 ; 210), dans lequel une sortie d'un élément de circuit inverseur précédent est couplé à une entrée d'un élément de circuit inverseur suivant.

8. Appareil (300) selon l'une des revendications précédentes, dans lequel un élément de circuit inverseur (110 ; 210) comprend une ou plusieurs portes NON-OU ou NON-ET.

9. Appareil (300) selon la revendication 8, dans lequel l'appareil est configuré pour sélectionner une porte NON-OU ou NON-ET d'un élément de circuit inverseur (110 ; 210) sur la base d'une valeur de bit respective d'une demande d'entrée.

10. Procédé (400) pour observer un anneau (100 ; 200) d'éléments de circuit inverseurs interconnectés (110 ; 210), dans lequel une sortie d'un premier élément de circuit inverseur est couplée à une entrée d'un second élément de circuit inverseur, dans lequel des signaux de sortie respectifs des éléments de circuit inverseurs indiquent l'état actuel de l'anneau, le procédé comprenant :

   la surveillance (410), en réponse à un état initial instable de l'anneau, d'un signal de sortie d'au moins un des éléments de circuit inverseurs (110 ; 210) dans au moins deux instants de temps d'observation ou des signaux de sortie d'au moins deux des éléments de circuit inverseurs dans au moins un instant de temps d'observation pour obtenir au moins deux valeurs d'observation de signal de sortie, dans lequel la surveillance comprend l'observation d'au moins une sortie en continu ou discrètement dans un intervalle de temps entre une libération de l'état initial instable et un temps de stabilisation désignant un temps qu'il faut au circuit en anneau pour atteindre un état stable après le libération; et
   la combinaison (420) des au moins deux valeurs d'observation de signal de sortie pour obtenir une valeur de réponse en réponse à l'état initial instable de l'anneau.

11. Programme d'ordinateur présentant un code de programme configuré pour réaliser une ou plusieurs étapes du procédé (400) selon la revendication 10, lorsque le programme d'ordinateur est exécuté sur un dispositif matériel programmable.

Fig. 1

Fig. 2a

Fig. 2b

Fig. 3

_400_

monitoring ~410

combining ~420

Fig. 4

Fig. 5

a)

b)

Fig. 6

Fig. 7

Fig. 8

Fig. 9

**REFERENCES CITED IN THE DESCRIPTION**

**Patent documents cited in the description**

- US 8848905 B1

**Non-patent literature cited in the description**

- **Q. CHEN ; G. CSABA ; P. LUGLI ; U. SCHLICHTMANN ; U. RÜHRMAIR.** Characterization of the bistable ring puf. *Design, Automation Test in Europe Conference Exhibition (DATE),* March 2012, 1459-1462

- **Q. CHEN ; G. CSABA ; P. LUGLI ; U. SCHLICHTMANN ; U. RÜHRMAIR.** The bistable ring puf: A new architecture for strong physical unclonable functions. *IEEE Int. Symposium on Hardware-Oriented Security and Trust,* June 2011